# EUROPÄISCHE PATENTSCHRIFT

(11) **EP 2 553 514 B1**
(45) Veröffentlichungstag und Bekanntmachung des Hinweises auf die Patenterteilung: **30.07.2014**
(21) Anmeldenummer: 11721989.9
(22) Anmeldetag: 21.03.2011
(51) Int. Cl.: G02B 26/00

(54) **ANZEIGEVORRICHTUNG MIT MEHRFARBIGEN ANZEIGEELEMENTEN**
DISPLAY DEVICE HAVING MULTI-COLOURED DISPLAY ELEMENTS
DISPOSITIF D'AFFICHAGE PRÉSENTANT DES ÉLÉMENTS D'AFFICHAGE MULTICOLORES

(30) Priorität: 27.03.2010 DE 102010013152
(43) Veröffentlichungstag der Anmeldung: 06.02.2013
(73) Patentinhaber: advanced display technology AG, 9050 Appenzell (CH)
(72) Erfinder: MÜLLER-MARC, Oliver, CH-9050 Appenzell (CH); JEROSCH, Dieter, 65812 Bad Soden (DE); BITMAN, Andriy, 44309 Dortmund (DE); BARTELS, Frank, 45527 Hattingen (DE)
(74) Vertreter: Tönhardt, Marion
(86) Internationale Anmeldenummer: PCT/DE2011/000289
(87) Internationale Veröffentlichungsnummer: WO 2011/120494

(56) Entgegenhaltungen:
- EP-A1- 0 806 753
- WO-A1-2009/036272
- DE-A1-102005 008 834
- US-A1- 2007 019 006

## Beschreibung

Die Erfindung betrifft eine Anzeigevorrichtung, mit zumindest einem elektronisch ansteuerbaren Anzeigeelement. Genauer betrifft die Erfindung eine Anzeigevorrichtung, welche sich den Elektrobenetzungseffekt zunutze macht.

Es ist bekannt, Anzeigevorrichtungen mit Hilfe farbiger Flüssigkeiten zu realisieren, wozu die Flüssigkeiten zwischen für einen Betrachter nicht einsehbaren und einsehbaren Positionen verlagert werden können. Ein effizientes Mittel für die Verlagerung der Flüssigkeiten ist das sogenannte Elektrowetting, bei dem eine sich in unmittelbarer Nachbarschaft des Flüssigkeitstropfens befindliche Elektrodenanordnung mit einer Spannung beaufschlagt wird, wodurch ein elektrisches Feld auf den Flüssigkeitstropfen einwirkt, in Folge welches sich die Oberflächenenergie und damit die Oberflächenspannung der Flüssigkeit erhöht. Dies kann je nach Anordnung dazu fiihren, dass sich die Flüssigkeit auf der Elektrode ausbreitet, oder diese sogar vollständig bedeckt, je nachdem, welche Geometrie und/oder Oberflächenbeschaffenheit die Elektrode aufweist und in welcher relativen Lage sich die Flüssigkeit und die Elektrode auch bezüglich des Erdgravitationsfeldes befinden. Es ist bekannt, die Elektroden mit einer hydrophoben Beschichtung zu versehen, um auf diese Weise einen maximalen Effekt zwischen dem Zustand der Flüssigkeit bei nicht beaufschlagter Elektrode und beaufschlagter Elektrode zu erzielen. Bereits mit den vorgenannten Mitteln ist es möglich, eine Tropfenbewegung zu realisieren, ohne dabei auf weitere funktionelle Elemente zurückgreifen zu müssen.

Durch eine lokale Variation der elektrischen Feldstärke kann demnach die lokale Oberflächenenergie der Flüssigkeit modifiziert und somit die Geometrie eines Tropfens lokal verändert werden. Insbesondere kann durch das Erzeugen einer lokal erhöhten Oberflächenenergie eine Bewegung des Tropfens erfolgen, indem sich dieser bevorzugt in den entsprechenden, durch das Vorhandensein eines elektrischen Feldes gekennzeichneten Bereich ausdehnt. Umgekehrt wird Flüssigkeit aus dem Bereich, in dem sie unbeeinflusst ist und somit eine geringere Oberflächenenergie aufweist, von dem beeinflussten Teil des Tropfens aufgrund der Oberflächenspannung hinterhergezogen, da sie in diesem Bereich der energieärmsten Geometrie, nämlich der einer Kugel, zustrebt. Daraus resultiert ein Nettotransport von Flüssigkeit aus dem Bereich geringer in den Bereich hoher Feldstärke.

Auf dieser Grundlage sind bereits vielfältige Anzeigen realisiert worden. Üblicherweise war es dabei stets das Ziel, ein elektronisch steuerbares bistabiles Anzeigeelement zu erzeugen, welches wahlweise den einen oder den anderen Zustand einnimmt. So ist es beispielsweise bekannt, eine Flüssigkeit zwischen einem ersten und einem zweiten Volumen, welche über einen Kanal miteinander verbunden sind, mit Hilfe des Elektrowettingeffekts hin und her zu transportieren, wozu jedes Volumen eine beigeordnete Elektrode aufweist, so dass sich die Transportrichtung jeweils aus dem Feldstärkenverhältnis zwischen beiden Elektroden ergibt. Vorzugsweise wird jeweils nur diejenige Elektrode mit einem Potential beaufschlagt, in deren Richtung die Flüssigkeit transportiert werden soll.

Aus der WO 2009/036272 A1 ist eine elektrowettingbasierte Anzeigevorrichtung bekannt, bei der jedem Anzeigepixel ein Elektrodenpaar, das einen Kondensator ausbildet, zugeordnet ist, mit Hilfe welches eine Flüssigkeit, die sich in dem einsehbaren Volumen des Pixels befindet, mit einem elektrischen Feld beaufschlagbar ist. Ein Rücktransport der polaren oder elektrisch leitenden Flüssigkeit in ein Reservoir, welches sich in Blickrichtung auf das Anzeigeelement unterhalb der einsehbaren Anzeigefläche befindet, wird dadurch erreicht, dass die Geometrien des einsehbaren Anzeigevolumens und die des Reservoirs derart aufeinander abgestimmt werden, dass die polare oder elektrisch leitende Flüssigkeit, wenn sie nicht von einem elektrischen Feld beaufschlagt ist, aufgrund des Young-Laplace-Druckes in das Reservoir gezogen wird.

Wollte man mit Hilfe der vorbenannten Technologie ein mehrfarbiges Display realisieren, so wäre dies nur mit Hilfe einer Vielzahl auf der Anzeigefläche nebeneinander angeordneter Pixel, welche unterschiedlich gefärbte Flüssigkeiten aufweisen, möglich. Es ist jedoch nicht möglich, die Vorrichtung gemäß der WO 2009/036272 A1 derart zu betreiben, dass ein einziges Pixel mehr als zwei Farbzustände einnehmen kann.

Die EP 0 806 753 beschreibt eine Anzeigevorrichtung mit zumindest einem elektronisch ansteuerbaren Anzeigeelement, bei der jedem Anzeigeelement ein gesondertes Elektrodenpaar zur Ansteuerung einer in einem Vorhaltevolumen vorgehaltenen Flüssigkeit zugeordnet ist. Es ist eine Ausführungsform beschrieben, bei der das Anzeigeelement ein einsehbares Teilvolumen umfasst, das mit drei Vorhaltevolumina fluidisch verbunden ist.

Es ist daher die Aufgabe der Erfindung, eine gattungsgemäße Anzeigevorrichtung vorzuschlagen, bei der mindestens ein Anzeigeelement mehr als zwei Farbzustände einnehmen kann.

Diese Aufgabe löst eine erfindungsgemäße Anzeigevorrichtung, gemäß Anspruch 1.

Ausgehend vom Stand der Technik wird der Fachmann erkennen, dass die erfindungsgemäß vorgesehene flächige Ausbildung der einsehbaren Teilvolumina insbesondere derart zu verstehen ist, dass die für die Funktionalität der vorgeschlagenen Anzeigevorrichtung notwendige Young-Laplace-Druck-Beaufschlagung des elektrisch leitenden oder polaren Flüssigkeitsanteils gewährleistet ist, wenn dieser sich in dem einsehbaren Teilvolumen befindet und nicht von einem elektrischen Feld beeinflusst wird. Darüber hinaus wird der Fachmann wissen, dass er bei der Auslegung des flächigen einsehbaren Teilvolumens und insbesondere seiner kürzesten Dimension im Hinblick auf die Nutzbarmachung des Young-Laplace-Druckes auch die Dimensionierung des jeweiligen zweiten Teilvolumens zu berücksichtigen bzw. beide Teilvolumina aufeinander abzustimmen hat.

Der wesentliche Unterschied der vorliegenden Erfindung zu dem beschriebenen Stand der Technik besteht darin, dass es nunmehr möglich ist, mit Hilfe eines einzigen Anzeigeelementes mehr als zwei Farbzustände, insbesondere mehr als einen eingefärbten und einen farblosen Zustand, darzustellen. Da die elektrisch leitenden oder polaren Flüssigkeiten, wie sie aus dem Stand der Technik für herkömmliche Elektrowetting-Anzeigeelemente verwendet werden, grundsätzlich untereinander mischbar sind, sieht die vorliegende Erfindung mechanische und/oder elektrische Mittel vor, für das wahlweise Zurückhalten derjenigen elektrisch leitenden oder polaren Flüssigkeiten in ihren Vorhaltevolumina, welche durch eine Spannungsbeaufschlagung der ersten Elektrodenanordnung nicht in das einsehbare Teilvolumen bewegt werden sollen. Mit Hilfe dieser Mittel wird nicht nur ein Vermischen der elektrisch leitenden oder polaren Flüssigkeiten unterbunden, sonder darüber hinaus je nach Ausbildung der ersten Elektrodenanordnung überhaupt erst ermöglicht, dass infolge einer Spannungsbeaufschlagung dieser lediglich diejenige elektrisch leitende oder polare Flüssigkeit in das einsehbare Teilvolumen befördert wird, die die für die Anzeigefunktion gewünschte Farbe aufweist.

Es ist zweckmäßig, dass einsehbare Teilvolumen in einer ersten, einem Betrachter zugewandten Ebene und die Vorhaltevolumina in einer der ersten Ebene untergeordneten zweiten Ebene auszubilden. Dabei erfolgt die fluidische Anbindung der Vorhaltevolumina an das einsehbare Teilvolumen vorzugsweise an der einem Betrachter abgewandten Unterseite des einsehbaren Teilvolumens.

Um einen hydraulischen Stau durch Flüssigkeitsverlagerungen in Folge der Spannungsbeaufschlagung der ersten Elektrodenanordnung zu vermeiden, ist es zweckmäßig, Rückflusskanäle für das Rückführen zumindest eines Teils der unpolaren Flüssigkeit aus dem einsehbaren Teilvolumen in dasjenige Vorhaltevolumen vorzusehen, dessen elektrisch leitende oder polare Flüssigkeit in das einsehbare Teilvolumen bewegt werden soll. Dies kann beispielsweise derart realisiert sein, dass das einsehbare Teilvolumen an seiner Unterseite einen Rückflusskanal aufweist, der entlang seiner Berandung verläuft, mit Abzweigungen zu den Übergangsbereichen zwischen dem einsehbaren Teilvolumen und den Vorhaltevolumina. Um die Länge der Abzweigungen möglichst gering zu halten, ist es zweckmäßig, die Vorhaltevolumina im Bereich der Berandung des einsehbaren Teilvolumens mit diesem fluidisch zu verbinden. Auf diese Weise kann auch eine ungleichmäßige Befüllung des einsehbaren Teilvolumens verhindert werden, welche anderenfalls aufgrund der sich durch das einsehbare Teilvolumen erstreckenden Rückflusskanäle auftreten könnte. Bevorzugt sind die Rückflusskanäle als Vertiefungen ausgeführt, unter Erzeugung eines kapillaren Sprungs.

Es ist grundsätzlich möglich, die erfindungsgemäße Anzeigevorrichtung reflektiv oder alternativ auch transflektiv auszubilden, d. h. entweder ausschließlich unter Verwendung des Umgebungslichts, oder unter Verwendung einer zusätzlichen Lichtquelle. Eine Ausführungsform der erfindungsgemäßen Anzeigevorrichtung, welche reflektiv ausgeführt ist, zeichnet sich dadurch aus, dass die unpolare Flüssigkeit im Wesentlichen transparent sein sollte und somit das an einer Unterseite des einsehbaren Teilvolumens reflektierte Licht die Farbe eines Reflektors annimmt, wenn sich die unpolare Flüssigkeit in dem einsehbaren Teilvolumen befindet. Grundsätzlich soll die Unterseite gerade diejenige Seite des flächigen einsehbaren Teilvolumens darstellen, an welcher die Vorhaltevolumina fluidisch mit dem einsehbaren Teilvolumen in Verbindung stehen. Es kann zweckmäßig sein, den Reflektor in Lichteinfallsrichtung hinter dem einsehbaren Teilvolumen anzuordnen.

Alternativ kann die Anzeigevorrichtung auch transflektiv, d. h. mit Hilfe selbstleuchtender Anzeigeelemente ausgeführt sein, mit einer Lichtquelle eines bestimmten Farbspektrums, welche in Blickrichtung auf die Anzeigevorrichtung unterhalb des einsehbaren Teilvolumens angeordnet ist und optisches Licht emittiert, das zumindest teilweise durch das einsehbare Teilvolumen hindurch antiparallel zu der Blickrichtung eines Betrachters propagiert. Es ist somit vorgesehen, dass die elektrisch leitenden oder polaren Flüssigkeiten wie ein Farbfilter für das Licht der Lichtquelle wirken.

Erfindungsgemäß umfasst die Anzeigevorrichtung eine zweite Elektrodenanordnung. Dabei ist es zweckmäßig sein, dass die zweite Elektrodenanordnung Auswahlelektroden mit einer hydrophoben Oberfläche bzw. Beschichtung umfasst, die im Übergangsbereich eines jeden Vorhaltevolumens zu dem einsehbaren Teilvolumen angeordnet sind und im spannungslosen Zustand nicht von den elektrisch leitenden oder polaren Flüssigkeiten benetzt werden. Wird jedoch eine solche Auswahlelektrode mit einer Spannung beaufschlagt, wird sie aufgrund des Elektrowetting-Effekts durch eine elektrisch leitende oder polare Flüssigkeit benetzt und die Flüssigkeit kann in das einsehbare Teilvolumen transportiert werden. Dies setzt jedoch immer noch voraus, dass das einsehbare Teilvolumen über die erste Elektrodenanordnung mit einem elektrischen Feld durchsetzt wird. Mit anderen Worten wirken bei dieser Ausführungsform die hydrophoben Auswahlelektroden wie ein Elektrowetting-Ventil.

Vorteilhafterweise erstrecken sich die Auswahlelektroden auch um den Übergangsbereich herum innerhalb des einsehbaren Teilvolumens, um auf diese Weise aufgrund ihrer hydrophoben Eigenschaften eine Barriere zu bilden, für diejenige elektrisch leitende oder polare Flüssigkeit, welche sich zu einem gegebenen Zeitpunkt innerhalb des einsehbaren Teilvolumens in der Nähe des Übergangs zu denjenigen Vorhaltevolumina befindet, welchen die in dem einsehbaren Teilvolumen vorliegende elektrisch leitende oder polare Flüssigkeit nicht zugeordnet ist. Auf diese Weise wird auch ein Vermischen der aktivierten elektrisch leitenden oder polaren Flüssigkeit mit den elektrisch leitenden oder polaren Flüssigkeiten, welche sich in den Vorhaltevolumina befinden, vermieden.

Zusätzlich zu der letztgenannten Maßnahme können auch Erhöhungen innerhalb des einsehbaren Teilvolumens und um den Übergangsbereich herum vorgesehen sein, welche eine Barriere sowohl für diejenige elektrisch leitende oder polare Flüssigkeit bilden, welche sich innerhalb des einsehbaren Teilvolumens befinden, als auch für diejenigen Flüssigkeiten, welche in den Vorhaltevolumina vorliegen.

Bei einer anderen Ausführungsform der Erfindung ist es vorgesehen, dass die Auswahlelektroden durch das jeweilige Vorhaltevolumen hindurch bis zur Rückseite des Anzeigeelementes durchkontaktiert sind, so dass die Anzeigeelemente der Anzeigevorrichtung vollständig über ihre Rückseiten mit Hilfe standardisierter Leiterplatten kontaktierbar sind. Derartige Elektroden-Durchkontaktierungen sind dem Fachmann als Micro-Vias bekannt und werden sehr gut beherrscht. Mit Hilfe dieser Ausführungsform können bekannte TFT-Tafeln als Zugangselemente verwendet werden. Wird dabei nicht gefordert, dass die erzeugte Gesamtstruktur transparent ist, wie es beispielsweise bei vollständig reflektiv betriebenen Systemen der Fall ist, können als Zugangselemente sogar standardisierte FR4-Leiterplatten oder dergleichen verwendet werden. Da bei solchen mehrlagigen Anschlusstechniken die notwendigen Ansteuerelemente der Anzeigevorrichtung, wie Treiberchips, auf der Rückseite des Aufbaus angebracht werden können, ist ein nahezu nahtloses Aneinanderfügen einzelner Submodule zu großen Flächen möglich.

Bei einer Ausführungsform der Erfindung ist vorgesehen, dass sie genau acht Vorhaltevolumina aufweist, die mit einem gemeinsamen einsehbaren Teilvolumen fluidisch in Verbindung stehen und von denen jedes Vorhaltevolumen eine der Farben Cyan, Magenta, Gelb, Schwarz, Rot, Grün, Blau und Weiß aufnimmt.

Bei einer vorteilhaften Ausführungsform der Erfindung ist mindestens ein Vorhaltevolumen als eine flächige Kavität ausgebildet. Eine flächige Kavität im Sinne der Erfindung zeichnet sich dadurch aus, dass sie ein Volumen abgrenzt, dass in mindestens einer kartesischen Raumrichtung wesentlich kleiner als in mindestens einer weiteren kartesischen Raumrichtung ausgebildet ist. Bevorzugt sind die flächigen Kavitäten bei einer Ausgestaltung der vorbenannten Ausführungsform parallel zueinander angeordnet. Auch bei dieser Ausführungsform kann die einer Kavität zugeordnete farbige Flüssigkeit mittels der ersten Elektrodenanordnung in das einsehbare Teilvolumen transportiert werden, wobei auf bereits beschriebene Weise die selektive Ansteuerung einer bestimmten farbigen Flüssigkeit mit Hilfe der beschriebenen Mittel, beispielsweise einer zweiten Elektrodenanordnung, erfolgt. Vorteilhaft bei der vorgenannten Ausführungsform ist, dass sich die Kontur des elektrisch leitenden oder polaren Flüssigkeitstropfens während des Transports zwischen dem einsehbaren Teilvolumen und dem zugeordneten Vorhaltevolumen nur unwesentlich ändert. Der Flüssigkeitstropfen weist daher das von monochromen Anordnungen bekannte Verhalten auf.

Besonders bevorzugt entsprechen daher zwei Abmessungen der Kavität im Wesentlichen jeweils einer Abmessung des einsehbaren Teilvolumens, wodurch die der Kavität zugeordnete elektrisch leitende oder polare Flüssigkeit im Wesentlichen formstabil zwischen der Kavität und dem einsehbaren Teilvolumen transportierbar ist.

Bei einer besonderen Ausführungsform unter Verwendung von Vorhaltevolumina, die als flächige Kavitäten ausgebildet sind, ist mindestens eine Kavität entlang einer Außenkante des einsehbaren Teilvolumen ausgerichtet. Bevorzugt ist zumindest der Bereich, über den die Kavität in das einsehbare Teilvolumen mündet, entlang einer Außenkante des einsehbaren Teilvolumens ausgerichtet.

Weitere Einzelheiten der Erfindung sind Gegenstand der nachfolgenden Figurenbeschreibung. Dabei zeigt:
- Figur 1: eine Draufsicht auf eine erste Ausführungsform des erfindungsgemäßen Anzeigeelements;
- Figur 2: eine Draufsicht auf eine zweite Ausführungsform des erfindungsgemäßen Anzeigeelements;
- Figur 3: eine Querschnittsansicht eines erfindungsgemäßen Anzeigeelements;
- Figuren 4a und 4b: eine Draufsicht und eine Seitenansicht einer Ausführungsform mit als flächige Kavitäten ausgebildeten Vorhaltevolumina; und
- Figuren 5a und 5b: eine Draufsicht und eine Seitenansicht einer weiteren Ausführungsform mit als flächige Kavitäten ausgebildeten Vorhaltevolumina.

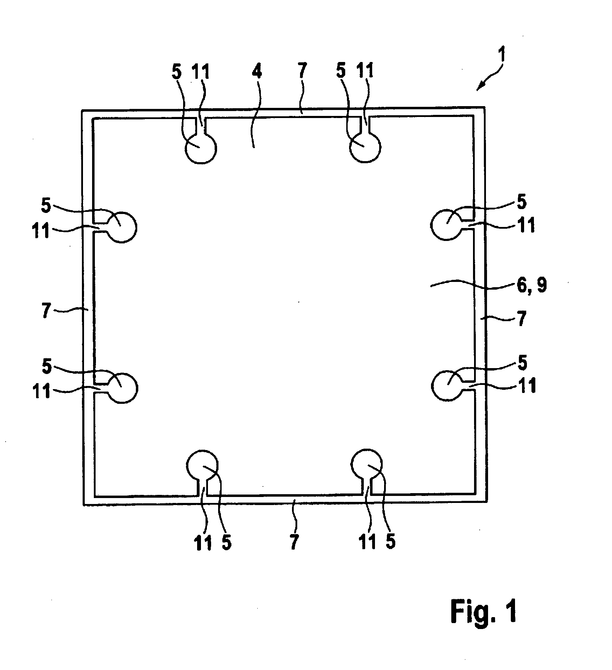

Die Figur 1 zeigt eine erste Ausführungsform eines erfindungsgemäßen Anzeigeelements 1, wobei vorzugsweise eine Vielzahl dieser in einer gemeinsamen Ebene liegend die erfindungsgemäße Anzeigevorrichtung ausbilden. Das dargestellte Anzeigeelement 1 weist genau acht Vorhaltevolumina 5 auf, von denen beispielsweise jeweils eines eine der Farben Cyan, Magenta, Gelb, Rot, Grün, Blau, Schwarz und Weiß in Form einer elektrisch leitenden oder polaren Flüssigkeit aufnimmt. Wie erfindungsgemäß vorgesehen, ist in der dargestellten Draufsicht das einsehbare Teilvolumen 4 sichtbar, wobei die in der zweidimensionalen Darstellung der Figur 1 sichtbare Fläche gerade die erste Elektrodenanordnung 6 darstellt. Dabei ist es möglich, die erste Elektrodenanordnung 6 in Form einer einzigen Elektrode oder mit Hilfe mehrerer Elektroden auszubilden. Bei der Verwendung separat ansteuerbarer Elektroden ist es zweckmäßig, diese gerade derart anzuordnen, dass über das selektive Ansteuern dieser eine bestimmte elektrisch leitende oder polare Flüssigkeit, welche sich im spannungslosen Zustand der Elektrodenanordnung 6 innerhalb der Vorhaltevolumina 5 befindet, einzeln und unabhängig von den übrigen elektrisch leitenden oder polaren Flüssigkeiten in das einsehbare Teilvolumen 4 bewegt werden kann. Ist die erste Elektrodenanordnung 6 einstückig, d. h. mit Hilfe einer einzigen Elektrode ausgebildet, welche die gesamte Fläche 6 bedeckt, so ist es für die selektive Ansteuerung einer einzigen elektrisch leitenden oder polaren Flüssigkeit, welche sich in einem der Vorhaltevolumina 5 befindet, notwendig, dass zusätzliche Mittel vorgesehen sind, welche bei Aktivierung der einheitlichen Elektrode 6 diejenigen elektrisch leitenden oder polaren Flüssigkeiten innerhalb ihrer Vorhaltevolumina 5 halten, die nicht in das einsehbare Teilvolumen 4 bewegt werden sollen.

Bei der dargestellten Ausführungsform kann es darüber hinaus sinnvoll sein, der ersten Elektrodenanordnung 6 einen Reflektor 9 beizuordnen, oder die Elektrodenanordnung 6 selbst als einen Reflektor auszubilden. Letzteres ist bereits dadurch möglich, dass die erste Elektrodenanordnung 6 in Form einer reflektiven Metallschicht ausgebildet ist.

Ebenfalls dargestellt ist der zur Verhinderung eines hydraulischen Staus in Folge der Flüssigkeitsverlagerungen notwendige Rückflusskanal 7, welcher über Abzweigungen 11 verfügt, die den Rückflusskanal 7 fluidisch mit den Vorhaltevolumina 5 verbinden. Es ist somit möglich, dass in Folge einer Bewegung der elektrisch leitenden oder polaren Flüssigkeit aus einem Vorhaltevolumen 5 in das einsehbare Teilvolumen 2 die sich zuvor in dem einsehbaren Teilvolumen 2 befindende unpolare Flüssigkeit über den Rückflusskanal 7 bzw. entsprechende Abzweigungen 11 insbesondere in dasjenige Vorhaltevolumen 5 verlagert, aus dem die in dem einsehbaren Teilvolumen 4 darzustellende elektrisch leitende oder polare Flüssigkeit vorgehalten wurde. Befindet sich eine elektrisch leitende oder polare Flüssigkeit innerhalb des einsehbaren Teilvolumens 4 und wird die dazu notwendige an der ersten Elektrodenanordnung 6 anliegende elektrische Spannung unterbrochen, so folgt daraus, dass die elektrisch leitende oder polare Flüssigkeit die unpolare Flüssigkeit, welche sich in dem der elektrisch leitenden oder polaren Flüssigkeit zugeordneten Vorhaltevolumen 5 befindet, aus diesem heraus in das einsehbare Teilvolumen 4 verdrängt.

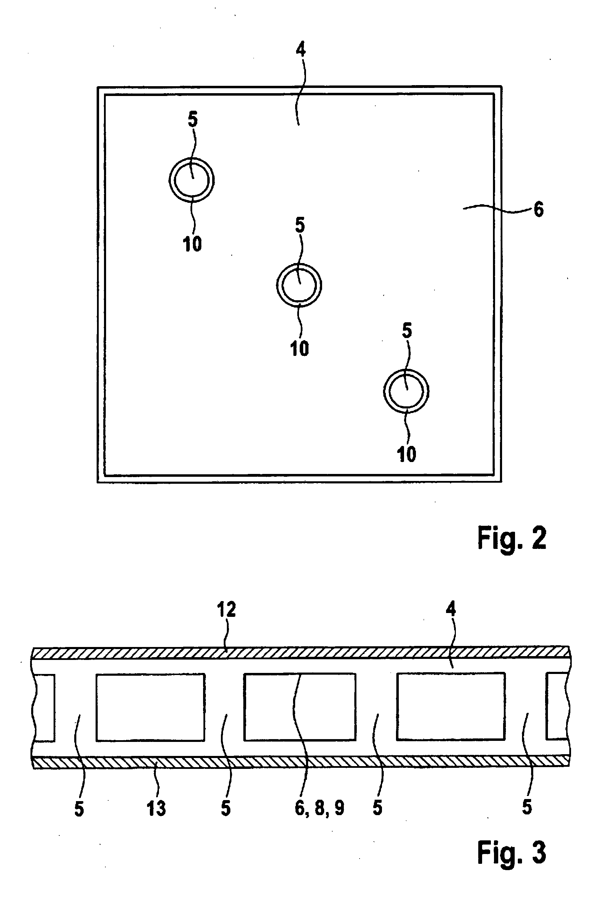

In der Figur 2 ist eine Draufsicht einer zweiten Ausführungsform des erfindungsgemäßen Anzeigeelements 1 dargestellt. Neben dem einsehbaren Teilvolumen 4, welches in der Draufsicht insbesondere durch das Vorliegen der ersten Elektrodenanordnung 6 deutlich wird, sind drei Vorhaltevolumina 5 vorgesehen, welche im Übergangsbereich zu dem einsehbaren Teilvolumen 4, bzw. der das einsehbare Teilvolumen einseitig begrenzenden ersten Elektrodenanordnung 6 eine von der ersten Elektrodenanordnung 6 elektrisch isolierte Auswahlelektrode 10 aufweisen. Bevorzugt ist die Auswahlelektrode 10 hydrophob beschichtet. Auf diese Weise ist es möglich, die erste Elektrodenanordnung 6 einheitlich auszubilden, d. h. derart, dass mit ihrer Aktivierung das gesamte einsehbare Teilvolumen 4 mit einem elektrischen Feld durchsetzt wird, was grundsätzlich dazu führen würde, dass jede der elektrisch leitenden oder polaren Flüssigkeiten, welche sich in den Vorhaltevolumina 5 befinden, in das einsehbare Teilvolumen 4 hineindrängen wollten. Dies kann jedoch gerade mit Hilfe der Auswahlelektrode 10 unterdrückt werden, und zwar indem es nur derjenigen elektrisch leitenden oder polaren Flüssigkeit ermöglicht wird, die zugeordnete hydrophob beschichtete Auswahlelektrode 10 zu benetzen, deren zugeordnete Auswahlelektrode 10 gleichzeitig zu der ersten Elektrodenanordnung 6 elektrisch beaufschlagt wird. Die hydrophobe Beschichtung der übrigen Auswahlelektroden 10, welche nicht aktiviert sind, verhindert ein Benetzen der entsprechenden elektrisch leitenden oder polaren Flüssigkeiten und somit ein Eindringen dieser in das einsehbare Teilvolumen 4.

Die Figur 3 zeigt eine Querschnittsansicht einer möglichen Ausführungsform des erfindungsgemäßen Anzeigeelements 1. Neben einer Deckschicht 12 ist auch eine Substratschicht 13 dargestellt. Es versteht sich, dass die Deckschicht 12 vorzugsweise transparent oder teiltransparent ausgeführt ist. Auch der Substratschicht 13 kann eine zusätzliche Funktion zugeordnet sein. So ist es etwa möglich, diese als eine Kontrastschicht auszubilden, beispielsweise weiß oder schwarz. In der Querschnittsansicht ist zu erkennen, dass die Geometrien der Vorhaltevolumina 5, welche mit dem gemeinsamen einsehbaren Teilvolumen 4 an dessen Unterseite 8 fluidisch in Verbindung stehen, derart auf die flächige Geometrie des einsehbaren Teilvolumens 4 abgestimmt sind, dass ein Flüssigkeitstropfen, welcher in Folge einer Spannungsbeaufschlagung der ersten Elektrodenanordnung 6 in das einsehbare Teilvolumen 4 bewegt wird, nach Deaktivierung der ersten Elektrodenanordnung 6 aufgrund des Young-Laplace-Druckes zurück in ein zugehöriges Vorhaltevolumen 5 gezogen wird. Es ist ebenfalls zu erkennen, dass neben der ersten Elektrodenanordnung 6 auch ein Reflektor 9, vorgesehen ist, welche beide im Bereich der Unterseite 8 des einsehbaren Teilvolumens 4 angeordnet sind. Es wird deutlich, dass diese Seite 8 gerade diejenige Fläche einnimmt, in welcher die Vorhaltevolumina 5 mit dem einsehbaren Teilvolumen 4 fluidisch in Verbindung treten.

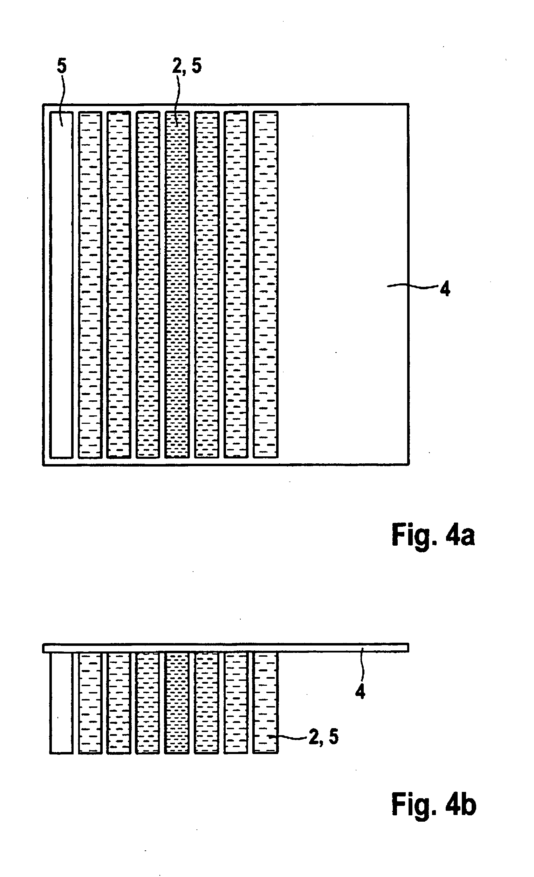

Figur 4a zeigt eine Draufsicht und Figur 4b eine Seitenansicht einer Ausführungsform mit als flächige Kavität ausgebildeten Vorhaltevolumina 5. In der Draufsicht ist zu erkennen, dass die Kavitäten eine Abmessung aufweisen, welche im Wesentlichen der Kantenlänge des einsehbaren Teilvolumens 4 entsprechen. In allen Kavitäten 5 bis auf eine werden elektrisch leitende oder polare Flüssigkeiten 2 vorgehalten. Durch die gemeinsame Kantenlänge von Kavität 5 und einsehbarem Teilvolumen 4 kann eine in der Kavität vorgehaltene Flüssigkeit 2 im Wesentlichen formstabil zwischen der Kavität 5 und dem einsehbaren Teilvolumen 4 transportiert werden.

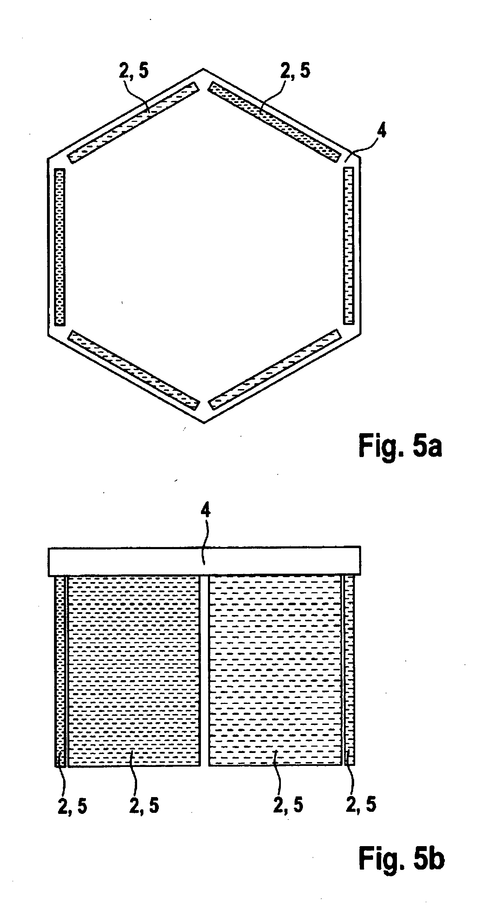

Die Figuren 5a und 5b zeigen eine Ausführungsform der Erfindung, bei der die als Kavität ausgebildeten Vorhaltevolumina 5 entlang einer Außenkante des einsehbaren Teilvolumens 4 ausgerichtet sind. Insbesondere ist auch für jede Kavität, wie der Draufsicht 5a zu entnehmen ist, der Bereich, über den die Kavität 5 in das einsehbare Teilvolumen 4 mündet, entlang einer Außenkante des einsehbaren Teilvolumens 4 ausgerichtet. Wiederum dargestellt sind unterschiedlich farbige elektrisch leitende oder polare Flüssigkeiten 2, die mit Hilfe der mit Bezug auf die vorangegangenen Figuren beschriebenen Mittel selektiv angesteuert und in das einsehbare Teilvolumen 4 transportierbar sind.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Anzeigevorrichtung, mit zumindest einem elektronisch ansteuerbaren Anzeigeelement (1), das aufweist:
- zumindest eine unpolare und zumindest zwei unterschiedlich gefärbte elektrisch leitende oder polare Flüssigkeiten (2, 3), wobei wenigstens die elektrisch leitenden oder polaren Flüssigkeiten (2) nicht mit der unpolaren Flüssigkeit (3) mischbar sind und die elektrisch leitenden oder polaren Flüssigkeiten (2) stets räumlich getrennt voneinander vorliegen;
- ein fluidisch abgeschlossenes Volumen, mit einem einsehbaren Teilvolumen (4) und zumindest zwei fluidisch mit dem einsehbaren Teilvolumen (4) verbundenen Vorhaltevolumina (5) für das Vorhalten jeweils genau einer der elektrisch leitenden oder polaren Flüssigkeiten (2), in denen sich jeweils zumindest ein Teil der unpolaren Flüssigkeit (3) befindet, wenn sich die in dem jeweiligen Vorhaltevolumen (5) vorgehaltene elektrisch leitende oder polare Flüssigkeit (2) in dem einsehbaren Teilvolumen (4) befindet; und
- zumindest eine Spannungsquelle, die an einer ersten Elektrodenanordnung (6) anliegt, die eine einstückige Elektrode aufweist, die die gesamte Fläche des einsehbaren Teilvolumens (4) bedeckt, so dass wahlweise das gesamte einsehbare Teilvolumen (4) mit einem elektrischen Feld durchsetzt werden kann;
**dadurch gekennzeichnet, dass** das einsehbare Teilvolumen (4) flächig ausgebildet ist, mit Dimensionen, die derart ausgewählt sind, dass die elektrisch leitenden oder polaren Flüssigkeiten (2) im spannungslosen Zustand der ersten Elektrodenanordnung (6) aufgrund des Young-Laplace-Druckes in das jeweilige Vorhaltevolumen (5) gezogen werden; und dass das Anzeigeelement (1) weiterhin für das wahlweise Zurückhalten derjenigen elektrisch leitenden oder polaren Flüssigkeiten (2) in ihren Vorhaltevolumina (5), welche durch eine Spannungsbeaufschlagung der ersten Elektrodenanordnung (6) nicht in das einsehbare Teilvolumen (4) bewegt werden sollen, eine zweite Elektrodenanordnung aufweist, die Auswahlelektroden (10) mit hydrophober Oberfläche umfasst, die im jeweiligen Übergangsbereich der Vorhaltevolumina (5) zu dem einsehbaren Teilvolumen (4) angeordnet sind und im spannungslosen Zustand nicht von den elektrisch leitenden oder polaren Flüssigkeiten (2) benetzt werden.

2. Anzeigevorrichtung nach Anspruch 1, **dadurch gekennzeichnet, dass** das Anzeigeelement (1) Rückflusskanäle (7) für das Rückführen zumindest eines Teils der unpolaren Flüssigkeit (3) aus dem einsehbaren Teilvolumen (4) in dasjenige Vorhaltevolumen (5), dessen elektrisch leitende oder polare Flüssigkeit (2) in das einsehbare Teilvolumen (4) bewegt werden soll.

3. Anzeigevorrichtung nach Anspruch 1, **dadurch gekennzeichnet, dass** die unpolare Flüssigkeit (3) im Wesentlichen transparent ist und somit das an einer Unterseite (8) des einsehbaren Teilvolumens (4) reflektierte Licht die Farbe eines Reflektors (9) annimmt, wenn sich die unpolare Flüssigkeit (3) in dem einsehbaren Teilvolumen (4) befindet, und wobei die Unterseite (8) gerade diejenige Seite des flächigen einsehbaren Teilvolumens (4) ist, an welcher die Vorhaltevolumina (5) fluidisch mit dem einsehbaren Teilvolumen (4) in Verbindung stehen.

4. Anzeigevorrichtung nach Anspruch 1, **dadurch gekennzeichnet, dass** das Anzeigeelement (1) selbstleuchtend ausgeführt ist, mit einer Lichtquelle, welche in Blickrichtung auf die Anzeigevorrichtung unterhalb des einsehbaren Teilvolumens (4) angeordnet ist und optisches Licht emittiert, das zumindest teilweise durch das einsehbare Teilvolumen (4) hindurch antiparallel zu der Blickrichtung propagiert.

5. Anzeigevorrichtung nach Anspruch 1, **dadurch gekennzeichnet, dass** die Auswahlelektroden (10) durch das jeweilige Vorhaltevolumen (5) hindurch bis zur Rückseite des Anzeigeelementes (1) durchkontaktiert sind, so dass die Anzeigeelemente (1) der Anzeigevorrichtung vollständig über ihre Rückseiten mit Hilfe standardisierter Leiterplatten kontaktierbar sind.

6. Anzeigevorrichtung nach einem der vorangegangenen Ansprüche, **dadurch gekennzeichnet, dass** sie genau acht Vorhaltevolumina (5) aufweist, von denen jedes Vorhaltevolumen (5) eine der Farben Cyan, Magenta, Gelb, Schwarz, Rot, Grün, Blau und Weiß aufnimmt.

7. Anzeigevorrichtung nach einem der vorangegangenen Ansprüche, **dadurch gekennzeichnet, dass** die Vorhaltevolumina (5) im Bereich einer Berandung des einsehbaren Teilvolumens (4) mit diesem fluidisch verbunden sind, wobei das einsehbare Teilvolumen (4) einen Rückflusskanal (7) aufweist, der entlang der Berandung verläuft, mit Abzweigungen (11) zu den Übergangsbereichen zwischen dem einsehbaren Teilvolumen (4) und den Vorhaltevolumina (5).

8. Anzeigevorrichtung nach Anspruch 1, **dadurch gekennzeichnet, dass** mindestens ein Vorhaltevolumen (5) als eine flächige Kavität ausgebildet ist.

9. Anzeigevorrichtung nach Anspruch 8, **dadurch gekennzeichnet, dass** eine Abmessung der Kavität im Wesentlichen einer Abmessung des einsehbaren Teilvolumens (4) entspricht.

10. Anzeigevorrichtung nach Anspruch 8, **dadurch gekennzeichnet, dass** zwei Abmessungen der Kavität im Wesentlichen jeweils einer Abmessung des einsehbaren Teilvolumens (4) entsprechen, so dass die der Kavität zugeordnete elektrisch leitende oder polare Flüssigkeit (2) im Wesentlichen formstabil zwischen der Kavität und dem einsehbaren Teilvolumen (4) transportierbar ist.

11. Anzeigevorrichtung nach Anspruch 8, **dadurch gekennzeichnet, dass** die Kavität entlang einer Außenkante des einsehbaren Teilvolumens (4) ausgerichtet ist.

12. Anzeigevorrichtung nach Anspruch 8, **dadurch gekennzeichnet, dass** der Bereich, in dem die Kavität in das einsehbare Teilvolumen (4) mündet, entlang einer Außenkante des einsehbaren Teilvolumens (4) ausgerichtet ist.

## Claims

1. A display device having at least one electrically controllable display element (1), comprising:
- at least one non polar and at least two differently colored electrically conductive or polar liquids (2, 3) not being miscible with the non polar liquid (3), and the electrically conductive or polar liquids (2) being present spatially separated from one another;
- a fluidically sealed volume, having a visible sub-volume (4) and at least to holding volumes (5) connected fluidically to the visible sub-volume (4), each for holding exactly one of the electrically conductive or polar liquids (2), in each of which at least a portion of the non polar liquid (3) is located when the electrically conductive or polar liquid (2) held in the respective holding volume (5) is present in the visible sub-volume (4);
- and at least one voltage source that is applied to a first electrode arrangement (6) comprising an electrode, that is made in one piece and that covers the interior surface of the visible sub-volume (4), so that selectively the interior visible sub-volume maybe permeated with an electric field,
**characterized in that** the visible sub-volume (4) is of planar embodiment, having dimensions which are selected in such a way that when the first electrode arrangement (6) is in the zero-voltage state, the electrically conductive or polar liquids (2) are drawn into the respective holding volume (5) as a result of Young-Laplace pressure;
and the display element furthermore comprises a second electrode arrangement for selectively retaining in their holding volumes (5) those electrically conductive or polar liquids (2) which are not intended to be moved into the visible sub-volume (4) by an impingement of voltage of the first electrode arrangement, the second electrode arrangement including selection electrodes (10) having a hydrophobic surface, the selection electrodes (10) being arranged in the transition area of the holding volumes (5) to the visible sub-volume (4), so that the selection electrodes (10) are not wetted by the electrically conductive or polar liquids (2) in the zero-voltage state.

2. The display device according to claim 1, **characterized in that** the display element (1) comprises return flow conduits (7) for returning at least part of the non polar liquid (3) out of the visible sub-volume (4) into that holding volume (5) whose electrically conductive or polar liquid (2) is intended to be moved into the visible sub-volume (4).

3. The display device according to claim 1, **characterized in that** the non polar liquid (3) is substantially transparent, and the light reflected at an underside (8) of the visible sub-volume (4) thus assumes the color of a reflector (9) when the non polar liquid (3) is present in the visible sub-volume (4), and the underside (8) being specifically that side of the planar visible sub-volume (4) at which the holding volumes (5) are in fluidic communication with the visible sub-volume (4).

4. Display device according to claim 1, **characterized in that** the display element (1) is embodied in self-luminous fashion, having a light source that is arranged below the visible sub-volume (4) in the viewing direction toward the display apparatus, and emits optical light that propagates at least partly through the visible sub-volume (4) anti-parallel to the viewing direction.

5. Display device according to claim 1, **characterized in that** the selection electrodes (10) are through-plated through the respective holding volume (5) to the back side of the display element, so that the display elements (1) of the display device are contactable over their interior backside with the aid of standardized circuit boards.

6. Display device according to one of the preceding claims, **characterized in that** it comprises exactly eight holding volumes (5) of which each holding volume (5) receives one of the colors cyan, magenta, yellow, black, red, green, blue, and white.

7. Display device according to one the preceding claims, **characterized in that** the holding volumes (5) are fluidically connected to the visible sub-volume (4) in the region of a periphery of the latter, the visible sub-volume (4) comprising a return flow conduit (7) that extends along the periphery, having branches (11) to the transition areas between the visible sub-volume (4) and the holding volumes (5).

8. Display device according to claim 1, **characterized in that** at least one holding volume (5) in embodied as a planar cavity.

9. Display device according to claim 8, **characterized in that** one dimension of the cavity corresponds substantially to one dimension of the visible sub-volume (4).

10. Display device according to claim 8, **characterized in that** two dimensions of the cavity each correspond substantially to one dimension of the visible sub-volume (4) so that the electrically conductive of polar liquid (2) associated with the cavity is transportable in substantially dimensionally stable fashion between the cavity and the visible sub-volume (4).

11. Display device according to claim 8, **characterized in that** the cavity is aligned along an outer edge of the visible sub-volume (4).

12. Display device according to claim 8, **characterized in that** the area in which the cavity opens into the visible sub-volume (4) is aligned along an outer edge of the visible sub-volume (4).

## Revendications

1. Dispositif d'affichage avec au moins un élément d'affichage pouvant être commandé électroniquement (1), qui présente :
- au moins un liquide non polaire et au moins deux liquides électriquement conducteurs ou polaires de couleurs différentes (2, 3), étant entendu qu'au moins les liquides électriquement conducteurs ou polaires (2) ne sont pas miscibles avec le liquide non polaire (3) et que les liquides électriquement conducteurs ou polaires (2) sont toujours séparés physiquement l'un de l'autre ;
- un volume fermé de façon fluidique comprenant un volume partiel visible (4) et au moins deux volumes de réserve (5) reliés de façon fluidique avec le volume partiel visible (4) destinés à stocker chacun précisément l'un des liquides électriquement conducteurs ou polaires (2), dans lesquels se trouve à chaque fois au moins une partie du liquide non polaire (3) quand le liquide électriquement conducteur ou polaire (2) stocké dans le volume de réserve (5) respectif se trouve dans le volume partie visible (4) ; et
- au moins une source de tension qui est installée à un premier agencement d'électrode (6), qui présente une électrode d'une seule pièce qui couvre la surface complète du volume partie visible (4) de telle sorte que la totalité du volume partiel visible (4) peut être traversée à volonté par un champ électrique ;
**caractérisé en ce que** le volume partiel visible (4) est réalisé de façon plate, dans des dimensions qui sont choisies de telle sorte que les liquides électriquement conducteurs ou polaires (2), dans l'état hors tension du premier agencement d'électrode (6), sont attirés dans le volume de réserve (5) respectif en raison de la pression de Young-Laplace, et **en ce que** l'élément d'affichage (1) présente en outre, pour retenir à volonté les liquides électriquement conducteurs ou polaires (2) dans leurs volumes de réserve (5) qui ne doivent pas être déplacés dans le volume partiel visible (4) sous l'effet de l'application d'une tension par le premier agencement d'électrode (6), un deuxième agencement d'électrode qui comprend des électrodes de sélection (10) ayant une surface hydrophobe qui sont agencées dans la zone de passage respective depuis les volumes de réserve (5) vers le volume partiel visible (4), et qui dans l'état hors tension, ne sont pas recouvertes par les liquides électriquement conducteurs ou polaires (2).

2. Dispositif d'affichage selon la revendication 1, **caractérisé en ce que** l'élément d'affichage (1) comprend des canaux de retour (7) pour ramener au moins une partie du liquide non polaire (3) depuis le volume partiel visible (4) dans le volume de réserve (5) respectif dont le liquide électriquement conducteur ou polaire (2) doit être déplacé dans le volume partiel visible (4).

3. Dispositif d'affichage selon la revendication 1, **caractérisé en ce que** le liquide non polaire (3) est essentiellement transparent, et par conséquent, la lumière réfléchie sur un côté inférieur (8) du volume partiel visible (4) adopte la couleur d'un réflecteur (9) quand le liquide non polaire (3) se trouve dans le volume partiel visible (4), étant entendu que le côté inférieur (8) est précisément le côté du volume partie visible de forme plate (4) sur lequel les volumes de réserve (5) sont en connexion de façon fluidique avec le volume partiel plat (4).

4. Dispositif d'affichage selon la revendication 1, **caractérisé en ce que** l'élément d'affichage (1) est réalisé de façon autolumineuse, avec une source de lumière qui est agencée dans la direction du regard vers le dispositif d'affichage en dessous du volume partiel visible (4) et qui émet une lumière optique qui se propage au moins en partie à travers le volume partiel visible (4) de façon inversement parallèle à la direction du regard.

5. Dispositif d'affichage selon la revendication 1, **caractérisé en ce que** les électrodes de sélection (10) sont métallisées à travers le volume de réserve (5) respectif jusqu'au côté arrière de l'élément d'affichage (1), de telle sorte que les éléments d'affichage (1) du dispositif d'affichage peuvent être connectés sur toute leur surface par le biais de leurs côtés arrière à l'aide de plaquettes imprimées standard.

6. Dispositif d'affichage selon l'une des revendications précédentes, **caractérisé en ce qu'**il présente précisément huit volumes de réserve (5), parmi lesquels chaque volume de réserve (5) adopte l'une des couleurs cyan, magenta, jaune, noir, rouge, vert, bleu et blanc.

7. Dispositif d'affichage selon l'une des revendications précédentes, **caractérisé en ce que** les volumes de réserve (5), dans la zone d'un bord du volume partiel visible (4), sont reliés de façon fluidique avec celui-ci, étant entendu que le volume partiel visible (4) présente un canal de retour (7) qui s'étend le long du bord comprenant des dérivations (11) vers les zones de passage entre le volume partiel visible (4) et les volumes de réserve (5).

8. Dispositif d'affichage selon la revendication 1, **caractérisé en ce qu'**au moins un volume de réserve (5) est réalisé sous la forme d'une cavité plate.

9. Dispositif d'affichage selon la revendication 8, **caractérisé en ce qu'**une dimension de la cavité correspond essentiellement à une dimension du volume partiel visible (4).

10. Dispositif d'affichage selon la revendication 8, **caractérisé en ce que** deux dimensions de la cavité correspondent chacune à une dimension du volume partiel visible (4), de telle sorte que le liquide électriquement conducteur ou polaire (2) attribué à la cavité peut être transporté dans une forme essentiellement stable entre la cavité et le volume partiel visible (4).

11. Dispositif d'affichage selon la revendication 8, **caractérisé en ce que** la cavité est disposée le long d'un bord extérieur du volume partiel visible (4).

12. Dispositif d'affichage selon la revendication 8, **caractérisé en ce que** la zone dans laquelle la cavité débouche dans le volume partiel visible (4) est disposée le long d'un bord extérieur du volume partiel visible (4).
